# EUROPÄISCHE PATENTSCHRIFT

(11) **EP 1 348 082 B1**
(45) Veröffentlichungstag und Bekanntmachung des Hinweises auf die Patenterteilung: **17.05.2006**
(21) Anmeldenummer: 02708254.4
(22) Anmeldetag: 03.01.2002
(51) Int. Cl.: F16H 21/00

(54) **STUFENLOS VERSTELLBARES GETRIEBE**
CONTINUOUSLY VARIABLE GEARBOX
TRANSMISSION A VARIATION CONTINUE

(30) Priorität: 05.01.2001 DE 10100374
(43) Veröffentlichungstag der Anmeldung: 01.10.2003
(73) Patentinhaber: Satellite Gear Systems B.V., 3012 CA Rotterdam (NL)
(72) Erfinder: FISCHER, Herwig, 41063 Mönchengladbach (DE)
(74) Vertreter: Vomberg, Friedhelm
(86) Internationale Anmeldenummer: PCT/EP2002/000009
(87) Internationale Veröffentlichungsnummer: WO 2002/053949

(56) Entgegenhaltungen:
- EP-A- 0 285 719
- FR-A- 866 718
- US-A- 4 326 431
- US-A- 4 850 248
- US-A- 5 950 488

## Beschreibung

Die Erfindung betrifft ein stufenlos verstellbares Getriebe mit zyklisch in Eingriff bringbaren Schaltelementen, das durch Verschiebung der Lage des Antriebselementes und des Abtriebselementes aus einer zueinander konzentrischen Position in beliebige exzentrische Positionen unterschiedliche Winkelgeschwindigkeiten zwischen dem Antriebs- und dem Abtriebselement bei gleichen Umfangsgeschwindigkeiten der Schaltelemente und damit unterschiedliche Übersetzungen erzeugt, wobei die Schaltelemente durch eine gezielte Steuerung in den jeweils drehmomentübertragenden Eingriff gekuppelt werden. Ein solches Getriebe ist aus der gattungsgemäßen EP 0 285 719 A1 bekannt. Bei diesem Getriebe werde als Schaltelemente Kugeln verwendet, die durch eine Steuerscheibe bewegt werden, so dass eine letzte Kugel in eine Lücke eines Zahnrades fällt, womit die gewünschte Arretierung beim Einkuppeln erzeugt wird.

Nach der EP 0 708 896 B1 ist ein stufenlos oder quasi stufenlos verstellbares formschlüssiges Satellitengetriebe bekannt, das ein Antriebs- und ein Abtriebselement sowie mehrere einzelne Räder besitzt, die gemeinsam ein Satellitenrad darstellen, das mit einem Zentralrad in einer permanenten Formschlußverbindung steht. Werden das Verhältnis der wirksamen Radien des Satellitenrades und des Zentralrades und die gegenseitige exzentrische Lage des Satellitenrades und des Zentralrades zueinander durch geeignete Mittel variiert, wird in entsprechender Weise das Drehzahlverhältnis zwischen dem Antriebs- und dem Abtriebselement bestimmt. Die das Satellitenrad bildenden Räder durchlaufen bei exzentrischer Lage zu dem Zentralrad einen drehmomentübertragenden Lastweg und einen lastfreien Weg zyklisch, wobei die Räder einerseits um die Satellitenradachse und andererseits über eine richtungsgeschaltete Kupplung nur in eine Richtung um ihre eigene Achse drehbar angeordnet sind. Beim Übergang vom lastfreien Weg zum Lastbogenweg übertragen die Räder durch Formschlusseingriff bei blockierter Eigenrotation das jeweils anliegende Drehmoment. Eine Ungleichförmigkeit der Drehmomentübertragung wird durch Variation der durch den Lastbogen bestimmten Radien und/oder der wirksamen Tangentialkomponenten durch eine zyklische Regelung zumindest teilweise kompensiert. In einem konkreten Ausführungsbeispiel, das in dieser Druckschrift beschrieben wird, werden die Kupplungselemente auf dem Umfang des Antriebselementes angebracht und können auf der Abtriebsseite durch dort vorgesehene radiale Nuten unterschiedliche Laufradien einnehmen. Die Kupplungselemente werden dabei über verschiedene, richtungsgeschaltete Kraft- und/oder Formschlusswirkungen so in Eingriff gebracht, dass immer dasjenige Kupplungselement das Drehmoment übernimmt, das zur höchsten Winkelgeschwindigkeit im Abtriebselement führt. Dadurch werden die übrigen Kupplungselemente selbsttätig in den "Überholbetrieb" übergehen, d.h. ausgekuppelt. Das in der EP 0 708 896 B1 beschriebene Getriebe und diesem ähnliche richtungsgeschaltete Getriebe haben prinzipbedingt den Nachteil, dass wegen der selbsttätigen Freilaufschaltung immer nur eine Übersetzung in Richtung höherer Abtriebsdrehzahlen, nicht jedoch Untersetzungen in niedrige Abtriebsdrehzahlen möglich sind.

Es ist daher Aufgabe der vorliegenden Erfindung, ein Getriebe mit stufenloser Regelung bzw. quasi stufenloser Regelung der Übersetzung zu schaffen, bei der sowohl höhere als auch niedrigere Abtriebsdrehzahlen schaltbar sind.

Diese Aufgabe wird durch das Getriebe nach Anspruch 1 gelöst.

Erfindungsgemäß werden im Gegensatz zum Stand der Technik die Schaltelemente durch eine gezielte Steuerung in den jeweils drehmomentübertragenden Eingriff gekuppelt, also nicht bzw. nicht nur über eine Richtungsschaltung stets dann in Eingriff gebracht, wenn das jeweilige Schaltelement die höchste Winkelgeschwindigkeit überträgt. Die verwendeten Mittel zum Ein- und Auskuppeln können in Bezug auf das Abtriebselement die Bewegung der Schaltelemente in axialer oder radialer Richtung bewirken.

Die Kupplung erfolgt zwischen dem Schaltelement und dem Abtriebselement, dass eine Scheibe oder eine Welle (als Achse) sein kann, über eine temporäre Formschlußverbindung.

Nach einem konkreten Ausführungsbeispiel der Erfindung ist zur Ansteuerung eine Steuerscheibe vorgesehen, die immer in konzentrischer Lage zu einer weiteren Scheibe angeordnet ist, die Radialführungen für die Schaltelemente aufweist. Vorzugsweise steuert die Steuerscheibe über radial ausgeführte Bewegungen. Als Formschlußeingriff zwischen dem Schaltelement und dem Antriebselement wird insbesondere eine Hirth-Verzahnung gewählt.

Um Fehler beim Zahneingriff und Stöße durch Ungleichförmigkeiten auszugleichen, ist nach einer weiteren Ausführungsform der Erfindung die Scheibe mit radialer Bewegungsfreiheit (zur Änderung des Übersetzungsverhältnisses) in der Nutenführung elastisch gelagert. Zum weiteren Ausgleich von Lagefehlern beim Zahneingriff und von Ungleichförmigkeiten auszugleichen, kann außer der radialen Bewegung der Schaltelemente in der genannten Scheibe ein Elastomer vorgesehen sein, das radiale Bewegungen und Umfangsbewegungen zwischen den Schaltelementen und der verwendeten Formschlußscheibe zuläßt.

Die Schaltelemente können nach der vorliegenden Erfindung elektromechanisch, hydraulisch, elektrisch, magnetisch oder über Piezo gesteuerte Elemente geschaltet werden.

Vorzugsweise wird die beim Formschluß gewählte Verzahnungsgeometrie so gewählt, dass das Verhältnis der Zahnbreite zu der Zahntiefe bei allen Drehzahlen größer ist als das Verhältnis von der maximal möglichen Umfangsgeschwindigkeitsdifferenz im Lastübergang zur Geschwindigkeit der axialen Hubbewegung der Schaltelemente beim Kupplungsvorgang.

Weitere Ausführungsformen der Erfindung sowie deren Vorteile werden im Folgenden anhand der Zeichnungen erläutert. Es zeigen:
- Fig. 1: eine Explosionsdarstellung eines erfindungsgemäßen Getriebes und
- Fig. 2: eine Teilansicht eines erfindungsgemäßen weiteren Satellitengetriebes.

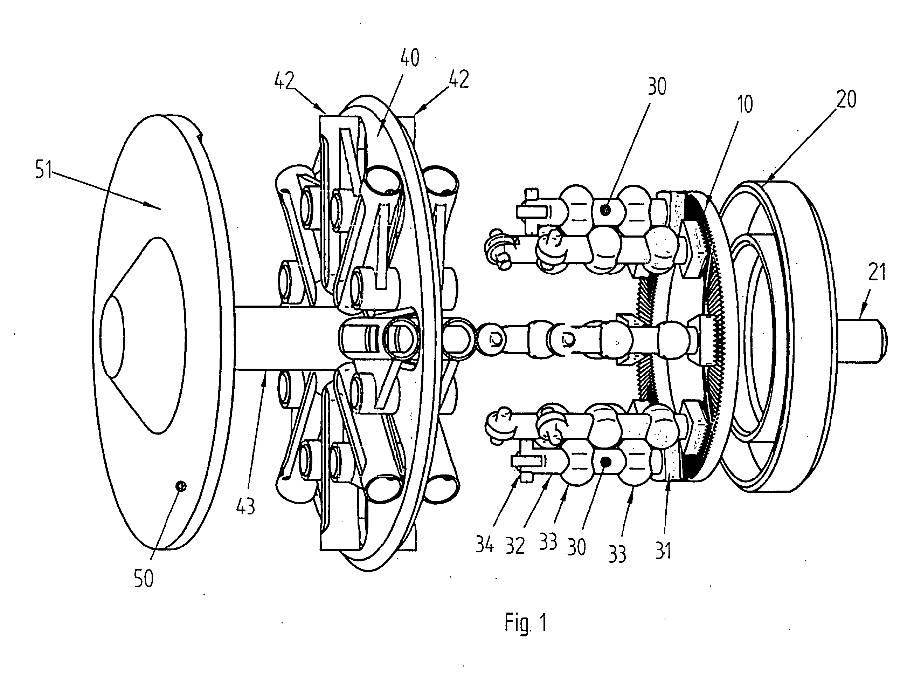

Das in Fig. 1 dargestellte Getriebe ermöglicht eine Drehmomentübertragung von einer mit einem Zahnrad 10 versehenen Scheibe 20 mit einer Achse 21 (als Antriebselement) auf eine Scheibe 40 (als Abtriebselement), wobei das Drehmoment durch Schaltelemente 30 übertragen wird, die über eine Nockenscheibe 50 gezielt ansteuerbar sind. Die Antriebsseite und die Abtriebsseite sind jedoch austauschbar.

Die Scheibe 40 besitzt beidseitig radiale Führungen 42, die strahlenförmig als lineare Hohlkörper angeordnet sind und gegenüberliegende Nuten für Stifte 35 aufweisen, mit denen unerwünschte Kippungen der Schaltelemente 30 vermieden werden. Die Schaltelemente 30 besitzen an ihrem, dem Zahnrad 10 mit einer Hirth-Verzahnung zugewandten Seite einen entsprechend mit einer Zahnung versehenen Körper 31. Die Schaltelemente 30 übertragen alle Umfangskräfte über Gleitsteine 33 und radiale Führungen 42 auf die Scheibe 40. Durch eine axiale Verschiebung der Schaltelemente 30 in Form einer Gleitbewegung der Achsen 32 in den Gleitsteinen 33 kann ein Formschluß zwischen den Körpern 31 und dem Zahnrad 10 bewirkt werden. Die Schaltelemente 30 laufen über Rollen 34, die an jeweiligen Enden der Achsen 32 angebracht sind. Die Nockenscheibe 50 besitzt einen Nocken 51, der sich beispielsweise über ein Winkelsegment von 45° erstreckt, so dass bei verwendeten acht Schaltelementen nur eines der Schaltelemente durch den Nocken axial verschoben und mit der Verzahnung am Zahnrad 10 in Eingriff gebracht wird. Beim Auslaufen des Schaltelementes aus dem segmentartigen Nocken 51 wird das Schaltelement über eine nicht dargestellte Anfederung und über die axialen Komponenten der Zahnkräfte wieder aus dem Eingriff gehoben. Die Nockenscheiben 50 bleibt stets konzentrisch zur Scheibe 40. Drehzahländerungen vom Antrieb zum Abtrieb werden bewirkt, indem die Scheibe 40 exzentrisch zu der Scheibe 20 bzw. dem Zahnrad 10 bewirkt wird.

Um den Lastübergang von einem zum anderen Schaltelement 30 möglichst ruckfrei zu gewährleisten, prinzipbedingte Ungleichförmigkeiten auszugleichen und beim Eingriff in die Verzahnung (Körper 31 und Zahnrad 10) Synchronfehler zu kompensieren, sind in einer bevorzugten Variante die Radialführungsnuten 42 auf der Scheibe 40 drehbar und angefedert gelagert. Vorzugsweise liegt der Drehpunkt auf dem Radius, bei dem das Übersetzungsverhältnis 1 beträgt. Über die Achse 21 und die Scheibe 20 wird das Drehmoment von der Zahnscheibe 10 zum Getriebeausgang abgeleitet; das Getriebe erlaubt auch den Gegenbetrieb, bei dem Abtrieb und Antrieb vertauscht werden. Mit der dargestellten und zuvor beschriebenen Ausführungsform lassen sich beliebige Übersetzungsverhältnisse einschließlich Untersetzungen zu kleineren Drehzahlen einstellen.

Im Rahmen der vorliegenden Erfindung ist es auch möglich, die Zahnflanken der Schaltelemente 30 über eine Etastomer-Zwischenlage mit den Achsen der Schaltelemente so zu verbinden, dass Zahneingriffsfehler beim Kupplungsvorgang durch elastische Bewegungen in Umfangsrichtung ausgeglichen werden. Werden über solche Elastomer-Zwischenlagen zusätzlich radiale Bewegungen ermöglicht, ergibt sich zusätzlich noch eine Verbesserung der prinzipbedingten Ungleichförmigkeiten des Getriebes. In einer weiteren Ausführungsvariante wird die in dem genannten Elastomer zugelassene Relativbewegung durch Endanschläge begrenzt, so dass die Elastomere nicht durch Spitzenlasten der Umfangskräfte überlastet werden können.

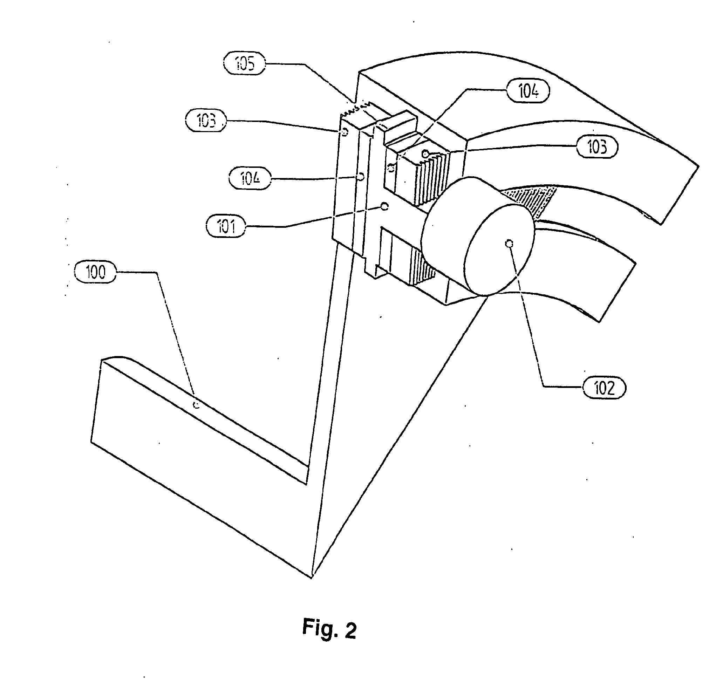

Fig. 2 zeigt eine Ausführungsform eines kuppelbaren Getriebes mit einer Ringscheibe 100, von der nur ein Segment der Vollscheibe mit Achse und Ringkontur dargestellt ist, die im Führungskanal Verzahnungen aufweist. Der Satellit 101 wird über die dargestellte Führungskontur 105 in der Mitte der Ringscheibe 100 gehalten. Die Zwischenlagen 104 werden durch Piezo-Effekte in der Wandstärke gedehnt bzw. kontrahiert und drücken so die Zahnsegmente 103 in die Verzahnung der Ringscheibe 100 bzw. ziehen sie aus dieser Verzahnung heraus. Hierdurch wird der Kupplungsvorgang ausgelöst und das Drehmoment aus der Ringscheibe in die Satelliten übertragen und von dort mit dem Übertragungsstift 102 in eine Sternscheibe ausgeleitet bzw. je nach Lastrichtung umgekehrt aus der Sternscheibe in die Satelliten- und die Ringscheibe übertragen. Um die Bauhöhe der Piezo-Elemente 104 zu erhöhen und so größere Kupplungswege zu ermöglichen, werden in einer weiteren Variante die Zwischenlagen 104 in den Übertragungsstift 102 hinein verlängert.

Statt einer Ausführung als Piezo-Stapel wird in einer weiteren Variante der Übertragungsstift 102 als Zylinder hohl ausgestaltet und ein darin geführter Kolben hydraulisch oder pneumatisch so bewegt, dass die Verzahnung ein- bzw. ausgekuppelt wird. Die Ansteuerung des Kupplungsvorganges erfolgt vorzugsweise über eine Schlitzblende im Hydraulikkreis dergestalt, dass in einer axialen Zuführung ein permanenter Druck anliegt und in der Rotation jeweils in dem Segment, in dem gekuppelt werden soll, also im Lastbogen, der Zylinder die Schlitzblenden passiert und damit hydraulisch Druck beaufschlagt wird.

Die Krafterzeugung der Kupplungsbewegung entsprechend der Ausführung nach Fig. 2 kann auch durch elektromechanische bzw. magnetische Wirkungen hervorgehoben werden.

Um eine kinematische Verblockung des Getriebes zu vermeiden, die dadurch begründet sein kann, dass einerseits nur über einen unendlich kleinen Umfangsweg die durch zwei Satelliten erzeugte Übersetzung identisch ist, der Kupplungsvorgang jedoch andererseits nicht unendlich schnell erfolgen kann, wird die Verzahnungsgeometrie so gewählt, dass das Verhältnis der Zahnbreite zu der Zahntiefe bei der gewählten Hirth-Verzahnung bei allen Drehzahlen größer ist als das Verhältnis der maximal möglichen Umfangsgeschwindigkeitsdifferenz im Lastübergang zur Geschwindigkeit der axialen Hubbewegung der Satelliten beim Kupplungsvorgang.

## Patentansprüche

1. Stufenlos verstellbares Getriebe mit zyklisch in Eingriff bringbaren Schaltelementen (30), das durch Verschiebung der Lage des Antriebselementes (20) und des Abtriebselementes (40) aus einer zueinander konzentrischen Position in beliebige exzentrische Positionen unterschiedliche Winkelgeschwindigkeiten zwischen dem Antriebs- und dem Abtriebselement bei gleichen Umfangsgeschwindigkeiten der Schaltelemente und damit unterschiedliche Übersetzungen erzeugt, wobei die Schaltelemente (30) durch eine gezielte Steuerung in den jeweils drehmomentübertragenden Eingriff gekuppelt werden,
**dadurch gekennzeichnet,**
**dass** die Schaltelemente einen mit einer Zahnung versehenen Körper (31) besitzen und dass die Kupplung zwischen dem Schaltelement (30) und dem Antriebselement, das vorzugsweise eine Scheibe oder Welle ist, über eine temporäre Formschlussverbindung zwischen diesem Körper (31) und einer an dem Antriebselement vorgesehenen Verzahnung erfolgt.

2. Getriebe nach Anspruch 1, **dadurch gekennzeichnet, dass** die Ansteuerung der Schaltelemente (30) in axialer Richtung erfolgt.

3. Getriebe nach einem der Ansprüche 1 oder 2, **dadurch gekennzeichnet, dass** zur Ansteuerung eine Steuerscheibe (50) vorgesehen ist, die immer in konzentrischer Lage zu einer Scheibe (40) angeordnet sind, die Radialführungen (42, 81) für die Schaltelemente (30) aufweist.

4. Getriebe nach Anspruch 1, **dadurch gekennzeichnet, dass** eine Steuerscheibe über radiale Bewegungen steuert.

5. Getriebe nach einem der Ansprüche 2 bis 4, **dadurch gekennzeichnet, dass** der Formschlußeingriff über eine Hirth-Verzahnung (10, 31; 102, 103) zwischen den Schaltelementen und dem Antriebselement erfolgt.

6. Getriebe nach einem der Ansprüche 3 bis 5, **dadurch gekennzeichnet, dass** die Scheibe (40) mit radialer Bewegungsfreiheit in der Nutenführung elastisch gelagert ist und so Fehler beim Zahneingriff und Stöße durch Ungleichförmigkeiten ausgleichen kann.

7. Getriebe nach einem der Ansprüche 1 bis 6, **dadurch gekennzeichnet, dass** außer der radialen Bewegung der Schaltelemente (30) in einer Scheibe (40) ein Elastomer radiale Bewegungen und Umfangsbewegungen zwischen den Schaltelementen (30) und dem Zahnrad bzw. der Formschlußscheibe (10) zuläßt, um Lagefehler beim Zahneingriff und Ungleichförmigkeiten auszugleichen.

8. Getriebe nach einem der Ansprüche 1 bis 7, **dadurch gekennzeichnet, dass** die Schaltelemente elektromechanisch, hydraulisch, elektrisch, magnetisch oder über Piezo-Elemente bzw. Piezo-Stapel-Aktoren geschaltet werden.

9. Getriebe nach einem der Ansprüche 1 bis 8, **dadurch gekennzeichnet, dass** die Verzahnungsgeometrie (10, 31; 102, 103) so gewählt wird, dass das Verhältnis der Zahnbreite zu der Zahntiefe bei allen Drehzahlen größer ist als das Verhältnis von der maximal möglichen Umfangsgeschwindigkeitsdifferenz im Lastübergang zur Geschwindigkeit der axialen Hubbewegung der Schaltelemente (30) oder von Satelliten (101) beim Kupplungsvorgang.

## Claims

1. Steplessly variable gear with cyclically meshing control elements (30) wherein shifting the positions of the input element (20) relative to the output element (40) from a concentric position into selected eccentric positions produces different angular speeds and thus different transmission ratios between the input and the output elements with the same peripheral speed of the control elements, whereby the control elements (30, 70, 103) are selectively moved into torque-transmitting coupling engagement,
**characterized in that**
the control elements have a body (31) with a toothing and that the coupling between the control element (30) and the input element, which preferably is a shaft or disk, is through a temporary physical connection between a toothing on this body (31) and a toothing provided on the input element.

2. Gear according to claim 1, **characterized in that** the selective controller moves the control elements (30) axially.

3. Gear according to one of claims 1 or 2, **characterized in that** the controller is a control disk (50) that is always concentric to a disk (40) that has radial guides (42, 81) for the control elements (30).

4. Gear according to claim 1, **characterized in that** the control disk controls via radial movement.

5. Gear according to one of claims 2 to 4, **characterized in that** the mechanical engagement is via Hirth teeth (10, 31; 102, 103) between the control elements and the input element.

6. Gear according to one of claims 3 to 5, **characterized in that** the disk (40) is movable elastically radially in a groove guide and thus can compensate for tooth misalignments and shocks resulting from irregularities.

7. Gear according to one of claim 1 to 6, **characterized in that** in addition to the radial movement of the control elements (30) in a disk (40), an elastomer permits radial and angular movements between the control elements (30) and the gear or disk (10) in order to compensate for tooth misalignments and irregularities.

8. Gear transmission according to one of claims 1 to 7, **characterized in that** the coupling procedures are set in motion electromechanically, hydraulically, electrically, magnetically, or via a piezo elements or stacks of piezo elements.

9. Gear according to one of claims 1 to 8, **characterized in that** the tooth geometry (10, 31, 102, 103) is selected such that the ratio of the width to the depth of the teeth at all speeds is greater than the ratio of the maximum possible peripheral speed difference in the load path to the speed of the axial shifting of the control elements (30) or the satellites (101) when being coupled.

## Revendications

1. Engrenage réglable de façon continue avec des éléments de commande (30) pouvant être mis en prise cycliquement, qui - en déplaçant l'élément moteur (20) et l'élément de sortie (40) d'une position où ils sont concentriques l'un par rapport à l'autre dans des positions excentriques quelconques - génère des vitesses angulaires différentes entre l'élément moteur et l'élément de sortie aux mêmes vitesses circonférentielles des éléments de commande et par conséquent des rapports de transmission différents, les éléments de commande (30) étant couplés, par une commande visée, respectivement dans la position assurant la transmission du couple,
**caractérisé par le fait**
**que** les éléments de commande possèdent un corps (31) pourvu d'une denture et que l'accouplement entre l'élément de commande (30) et l'élément moteur qui, de préférence, est un disque ou un arbre, est réalisé par une liaison temporaire à engagement positif entre ce corps (31) et une denture prévue sur l'élément moteur.

2. Engrenage selon la revendication 1, **caractérisé par le fait que** la commande des éléments de commande (30) se fait dans la direction axiale.

3. Engrenage selon l'une des revendications 1 où 2, **caractérisé par le fait que**, pour la commande, on prévoit un disque de commande (50) qui est disposé toujours dans une position concentrique par rapport à un disque (40) qui présente des guides radiaux (42, 81) pour les éléments de commande (30).

4. Engrenage selon la revendication 1, **caractérisé par le fait qu'**un disque de commande commande via des mouvements radiaux.

5. Engrenage selon l'une des revendications 2 à 4, **caractérisé par le fait que** l'engrènement à engagement positif est réalisé par une denture Hirth (10, 31 ; 102, 103) entre les éléments de commande et l'élément moteur.

6. Engrenage selon l'une des revendications 3 à 5, **caractérisé par le fait que** le disque (40) est guidé, avec une liberté de mouvement radiale, dans des rainures et est logé élastiquement et peut compenser ainsi des défauts lors de l'engrènement ainsi que des coups qui sont dus à des irrégularités.

7. Engrenage selon l'une des revendications 1 à 6, **caractérisé par le fait que**, outre le mouvement radial des éléments de commande (30) dans un disque (40), un élastomère autorise des mouvements radiaux et des mouvements périphériques entre les éléments de commande (30) et la roue dentée ou bien le disque à engagement positif (10) afin de compenser des erreurs de position lors de l'engrènement ainsi que des irrégularités.

8. Engrenage selon l'une des revendications 1 à 7, **caractérisé par le fait que** les éléments de commande sont commandés de façon électromagnétique, hydraulique, électrique, magnétique ou par des éléments piézoélectriques ou bien par des actionneurs piézoélectriques multicouches.

9. Engrenage selon l'une des revendications 1 à 8, **caractérisé par le fait que** la géométrie de denture (10, 31 ; 102, 103) est choisie de telle manière que le rapport de la largeur des dents à la profondeur des dents est, à toute vitesse de rotation, plus grand que le rapport de la différence possible au maximum de la vitesse circonférentielle dans la transition de charge à la vitesse du mouvement de course axiale des éléments de commande (30) ou de satellites (101) lors du processus d'accouplement.
